# EUROPEAN PATENT APPLICATION

(11) **EP 2 043 307 A1**
(43) Date of publication of application: **01.04.2009**
(21) Application number: 07721299.1
(22) Date of filing: 29.05.2007
(51) Int. Cl.: H04L 12/56

(54) **A PACKET NETWORK AND A METHOD TO REALIZE THIS NETWORK**

(30) Priority: 14.07.2006 CN 200610098776; 16.08.2006 CN 200610109390; 21.09.2006 CN 200610159419
(71) Applicant: Huawei Technologies Co., Ltd., Shenzhen, Guangdong Province 518129 (CN)
(72) Inventor: WU, Sang, Guangdong 518129 (CN); SHI, Youzhu, Guangdong 518129 (CN)
(74) Representative: Gulde Hengelhaupt Ziebig & Schneider
(86) International application number: PCT/CN2007/001726
(87) International publication number: WO 2008/009197

(57) **Abstract**

The invention provides a packet network with enhanced service filter criteria, including: a service filter criteria library, configured to store and generate a service filter criterion for a user; a service control point, configured to provide a service to the user; and a service trigger point, configured to obtain the service filter criterion from the service filter criteria library, and determine, according to the service filter criterion, whether a currently processed SIP communication needs to be triggered to the service control point or processed locally, wherein the service filter criterion includes at least one of the following: a message body other than an SIP message Session Description, a session state, a message event other than an SIP initial request message, time, user presence information, a user state, a service invocation message, related information for another criterion, a virtual application server address, filter criterion validity, processing of service invocation result, a service identification, and a ban criterion for service control point invocation. The invention further provides a service triggering method for implementing the service triggering in a packet network.

## Description

The application claims priority to Chinese Patent Applications No. 200610098776.7, No. 200610109390.1, and No. 200610159419.7, all entitled "Packet Network with Enhanced Service Filter Criteria and Method Implementing the Same", filed on 14th Jul. 2006, 16th Aug. 2006, and 21st Sept. 2006 respectively; the disclosures of which are incorporated herein by reference in their entireties.

### FIELD OF THE INVENTION

The present invention relates to the field of communication technologies, and more particularly, to a packet network with enhanced service filter criteria and an implementation method thereof.

### BACKGROUND

IP Multimedia Subsystem (IMS) is a system based on Session Initiation Protocol (SIP), whose session layer and service layer are separated. IMS provides a necessary scheme for service invocation. Service provisioning in the IMS comprises the following three steps:

1. defining a possible service or service set;

2. creating user specific service data in the form of initial filter criteria, when a user subscribes to or modifies a service subscription; and

3. transmitting an arriving initial request to an application server.

When a user obtains an IMS subscription from an operator, the operator needs to assign a user profile for the user. The user profile comprises at least a Private User Identity and a single service profile, which is permanently stored at a Home Subscriber Server (HSS). The user profile may be transmitted from the HSS to a Serving-Call Session Control Function (S-CSCF) entity assigned for the user by two user data processing operation, i.e., Server-Assignment-Answer (SAA) or Push-Profile-Request (PPR).

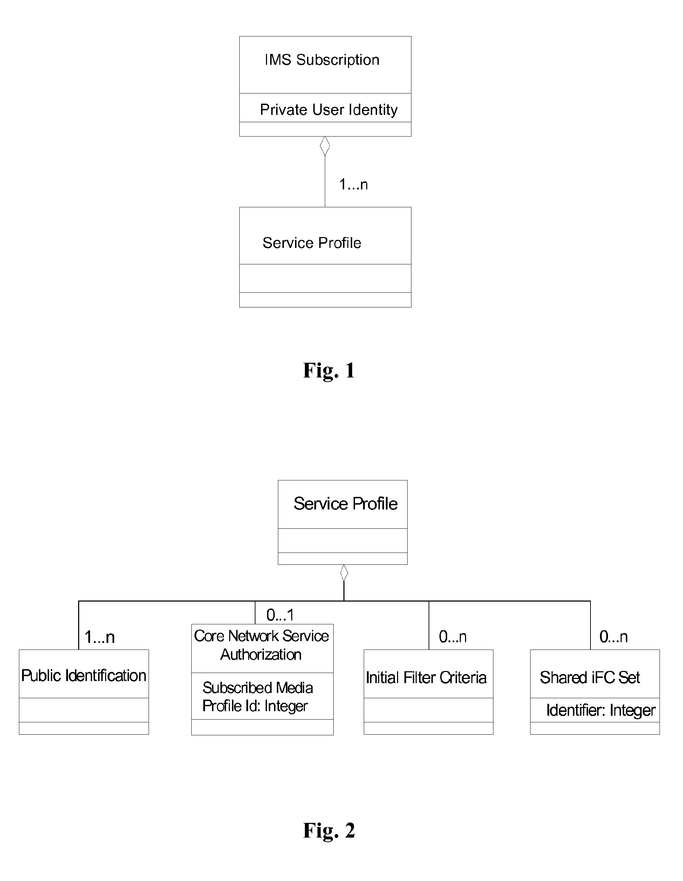

To implement the service triggering involved in the IMS service provisioning, the literatures of MultiService Forum (MSF) and the prior art of 3GPP TS 29.228 (IP Multimedia (IM) Subsystem Cx and Dx Interfaces; Signaling flows and message contents) respectively provide corresponding technical solutions. In the following, the above technical solutions will be described in detail with reference to Figs. 1 to 8.

Figs. 1 to 4 illustrate an overall structure of the user profile defined in 3GPP TS 29.228.

Fig. 1 shows the structure of a User Profile, Fig. 2 shows the structure of Service Profile, Fig. 3 shows the structure of Initial Filter Criteria, and Fig. 4 shows the structure of Service Point trigger.

The Service Point Trigger sets a determination criterion for service triggering, which may include the following types:

Request-Uniform resource identifier (URI): indicates the source to which a request points;

SIP Method: indicates the type of the SIP request;

SIP Header: includes information related to the request, where a Service Point Trigger (SPT) may be based on the presence of any SIP header or the content of any SIP header;

Session Case, which has three possible values, i.e., Originating, Terminating, or Terminating_Unregistered, indicating whether the filter should be used by the S-CSCF processing the Originating or Terminating of an end user or Terminating of an unregistered end user; and

Session Description, which is the content of any Session Description Protocol (SDP) field within an SIP Method.

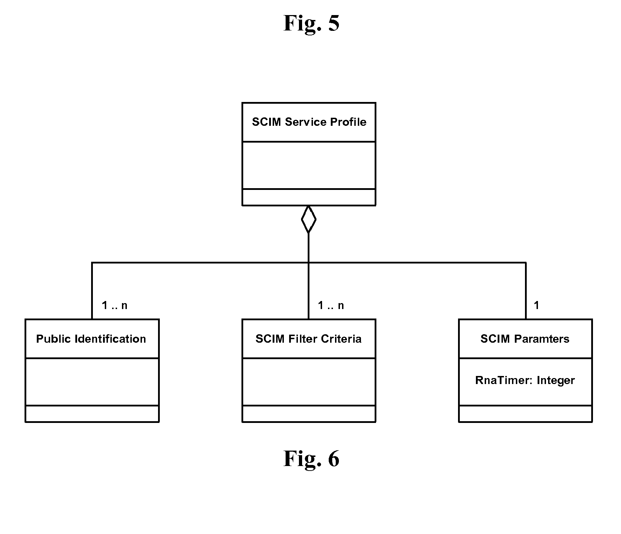

Fig. 5 illustrates the interface of IP multimedia Service Control (ISC) with R3-architecture proposed by MSF.

As shown in Fig. 5, the document of msf.2006.004 by MSF proposes the following service architecture.

Serving Call Session Controller (S-CSC) may trigger a call to the service layer directly. A service layer entity may be an open service access gateway, an Application Server (AS), or a service logic gateway connected with a traditional service network. S-CSC may also trigger the call to the service layer using a Service Broker/Service Capability Interaction Manager (SB/SCIM). The SB/SCIM is interfaced with the S-CSC and the service layer entity using an ISC. An Sh interface is used between SB/SCIM and HSS to obtain SCIM Service Profile.

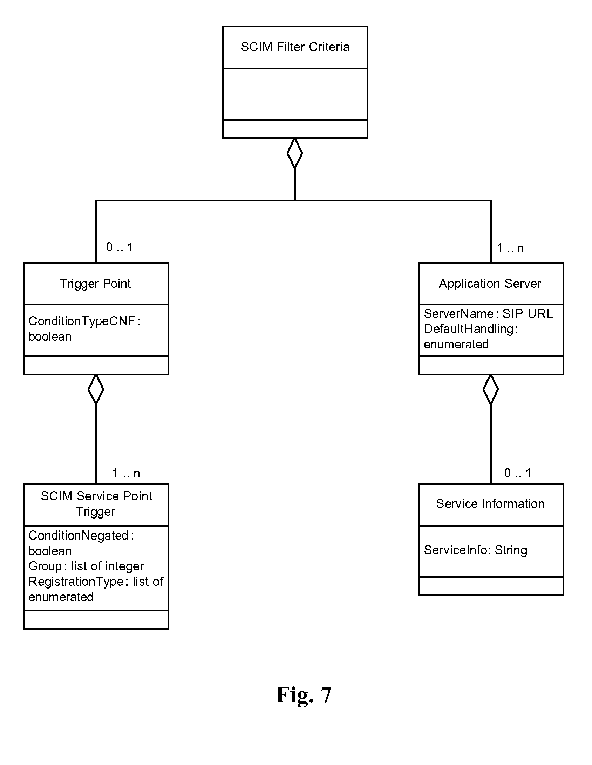

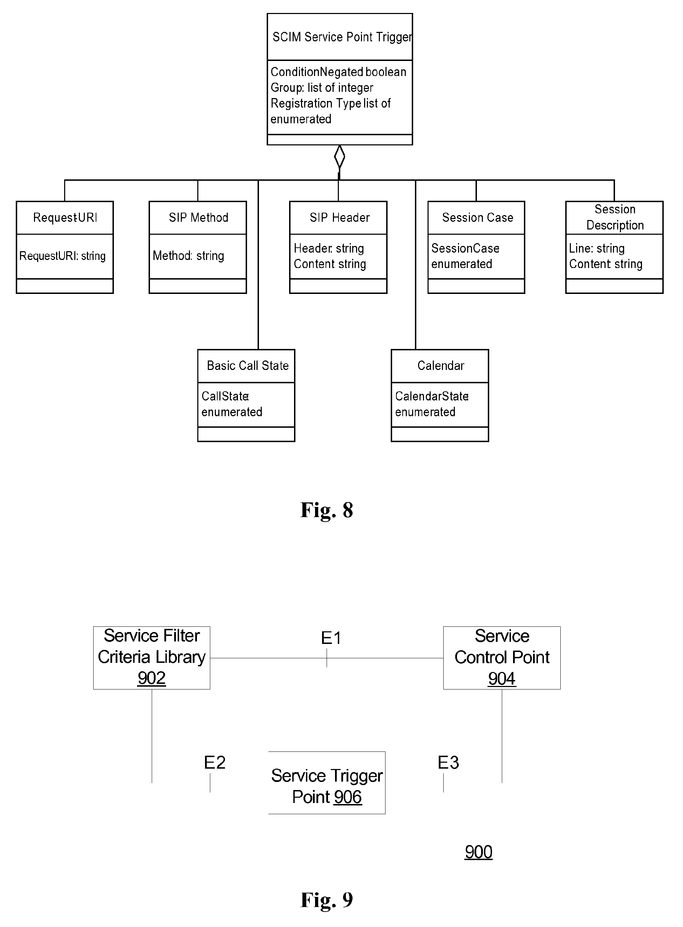

The MSF SB/SCIM Service Profile uses a description method similar to that of the Service Profile of 3rd Generation Partnership Project (3GPP). Figs. 6 to 8 illustrate an overall structure of the MSF SB/SCIM Service Profile, where, Fig. 6 illustrates the structure of the SCIM Service Profile, Fig. 7 illustrates the structure of the SCIM filter criteria, and Fig. 8 illustrates the structure of SCIM service point trigger.

As can be seen from Figs. 6, 7, and 8, two SPTs are newly added in the MSF SB/SCIM, which may be triggered according to a Basic Call State or a Calendar. The Call State may have one of the following values, Call Attempt, Busy, No Answer, and Hang-up. According to RFC 2445, the Calendar may take one of the following values, FREE, BUSY, BUSY-UNAVAILABLE, BUSY-TENTATIVE, or UNOBTAINABLE.

Currently, the triggering of a service trigger point relies mainly on the SIP messages received by the service trigger point. And the format of an SIP message defined in 'RFC 3261 SIP: Session Initiation Protocol' is:
generic-message = start-line
*message-header
CRLF
[message-body]
start-line = Request-Line / Status-Line
Request-Line = Method SP Request-URI SP SIP-Version CRLF
Status-Line=SIP-Version SP Status-Code SP Reason-Phrase CRLF

However, according to the above definition, the following problems may occur while using 3GPP Initial Filter Criteria (iFC) and MSF SCIM filter criteria to trigger the service:

1. The prior art cannot trigger the service according to a part of the SIP message body other than the SDP information (Session Description information);

2. The prior art may trigger the service according to an SIP initial request message. The SIP initial request message is the SIP message in the initial action SIP request line defined in RFC 3261 and may be messages, such as INVITE and SUBSCRIBE messages, that may create a signaling path. iFC (initial filter criteria) are the filter criteria for the SIP initial request messages (i.e., SIP initial messages). However, in the prior art, the service may not be triggered according to SIP messages other than the SIP initial request message, such as SIP subsequent request messages (subsequent request messages after the creation of the SIP signaling path, such as BYE, ACK, CANCEL, PRACK, UPDATE message, etc.) and SIP response messages, including SIP subsequent request method, message header in the SIP subsequent request message, triggering of message body in the SIP subsequent request message, triggering of state code, triggering of message header in the SIP response, and triggering of message body in the SIP response message.

Therefore, the triggering capability of the SIP message according to the existing standard is inadequate, while there are practical requirements. For example, users of Customised Applications for Mobile network Enhanced Logic (CAMEL) may send a short message through the IMS domain and the SIP message carrying the short message signaling in its message body needs to be triggered to the service control point to perform processing such as billing control and changing of the called short number in Virtual Private Network (VPN).

3. MSF introduces extension to the 3GPP filter criteria and introduces triggering according to Basic Call State and triggering according to Calendar. However, the triggering according to Basic Call State defined by MSF only supports the four states of Call Attempt, Busy, No Answer, and Hang-up.

4. Service triggering according to current time information is not supported by the triggering mechanism in the prior art, although service triggering according to the time information is a relatively important service triggering requirement.

5. The triggering according to Calendar by MSF may occur according to the user state. However, it only uses Free/Busy Time Type defined in RFC 2445, cannot provide more enriched information, and does not meet the requirements of more enhanced and personalized service triggering capabilities needed by the user.

6. The filter criterion in the prior art does not have enough support for the user state. Here the user state refers to a call-independent state, such as registration state (whether registered), roaming state (whether in roaming), etc. iFC only supports the user state of "Terminating_Unregistered". That is, it only provides a filter criterion based on the user's register state for the called user, but does not support providing the filter criterion based on the user's register state for the calling user. It cannot trigger the service according to the user's roaming state either, while triggering according to the user's roaming state is an important service triggering requirement.

7. Service invocation messages cannot be specified. In the prior art, the S-CSCF/MSF, SB/SCIM, etc., receive an SIP request message which matches a service filter criterion. The SIP request message may only be sent to a specified AS, i.e., the service invocation message for the specified AS is the triggering message of the service filter criterion. However, in practical applications, the triggering message for the service filter criterion and the invocation message for the specified AS may not be the same type of the SIP message. Furthermore, as discussed above, the MSF SB/SCIM may be connected to a traditional service network through a service logic gateway. In fact, if the service logic gateway is located in the MSF SB/SCIM, the interaction interface between the MSF SB/SCIM and the traditional service network would be a protocol interface supported by the traditional service network, such as an Intelligent Protocol Interface. That is to say, the service invocation message may not be the SIP protocol. In the prior art, the service filter criterion cannot support service invocation messages other than the SIP protocol.

8. Other filter criteria cannot be described, while referencing another filter criterion in one service filter criterion is also an import service triggering requirement.

9. The prior art can only forward messages to the AS according to a filter criterion, but cannot specify specific processing after the triggering condition is matched. For example, the prior art cannot acquire service triggering data voluntarily, neither can it implement triggering determination with a flow, such as determining whether the calling user is on a blacklist of the called user before triggering the called service. Moreover, when the MSF SB/SCIM interacts with the traditional service network directly, it cannot send messages that do not trigger a service to the service control point, such as sending an InitialDP message of INAP to the SCP. It can neither perform corrections of the signaling relationship (e.g., sending a message to end the communication with a specified service control point) nor signaling messages (e.g., blocking some signaling parameters) between the service trigger point and the service control point according to the filter criterion.

10. In the prior art, the filter criteria of the iFC and MSF are always valid, and the S-CSCF/MSF SB/SCIM always performs the filter criterion after obtaining it. However, the filter criterion may only be "valid temporarily". For example, a filter criterion generated by the AS when performing the current service may only be valid during the processing of the current call. When the call is released, the filter criterion becomes invalid. The prior art does not support validity management of the filter criterion.

11. In the prior art, the processing of the service invocation result only supports continuing to process or terminating the session but does not support more enriched processing type. For example, the S-CSCF/MSF SB/SCIM sends the SIP initial message to the AS according to the filter criterion. If for some reasons (such as temporary network failure) the AS does not return an SIP message to the S-CSCF/MSF SB/SCIM within the specified time, the service control point may be invoked again.

12. Neither the existing iFC service filter criteria nor the MSF service filter criteria can identify the service corresponding to a service filter criterion, which may lead to some problems. For example, the AS has to determine the service type to be invoked again after receiving the message triggering the service; it is difficult to know the invoked service during the session, which would cause trouble for service interaction. Furthermore, in the existing service filter criterion, the already invoked service types cannot be taken as a criterion matching condition, which is also an important service triggering control requirement in the service interaction processing.

13. A ban criterion for the AS invocation is not supported by the existing iFC and MSF service filter criteria. For example, when the S-CSCF/MSF SB/SCIM invokes a series of AS's according to an SIP initial message, the response message subsequent to the SIP initial message would go through all the invoked AS's in turn according to the prior art. In fact, some AS's may not be invoked for certain response messages, while the prior art cannot meet the requirement.

In summary, there are the following problems with the technical solutions provided by the prior art.

Service triggering according to a part of the SIP message body other than the SDP information is not supported.

The Basic Call State is limited in that there are only four states - Call Attempt, Busy, No Answer, and Hang-up. Such a state classification is not fine enough. For example, it cannot distinguish whether Hang-up is before or after the call.

Service triggering according to SIP message events other than the SIP initial request message is not supported.

Services cannot be triggered according to time. The MSF Calendar triggering only provides limited triggering capability according to the user information, and cannot provide more triggering schemes such as triggering according to the user's location.

Services cannot be triggered according to the user state; neither can the service invocation message be specified.

Other filter criteria cannot be referenced.

Specific processing cannot be specified after the trigger condition is matched.

Validity management for the service filter criterion is not supported.

More enriched processing of the service invocation result is not supported.

The service corresponding to the service filter criterion cannot be identified, the service types cannot be taken as the criterion match condition, and the ban criterion for the AS invocation is not supported.

Therefore, there is a need for a service triggering solution for the packet network which may solve part of or all the above technical problems.

### SUMMARY

Embodiments of the invention provide a packet network with enhanced service filter criteria and its implementing method, which can at least solve part of or all the above technical problems in the prior art.

An embodiment of the invention provides a packet network, comprising:

a service filter criteria library, configured to provide a service filter criterion for a user;

a service control point, configured to provide a service to the user; and

a service trigger point, configured to obtain a service filter criterion from the service filter criteria library and determine, according to the service filter criterion, whether the communication currently being processed should be triggered to the service control point or be processed locally, wherein the service filter criterion includes at least one of the following:

a message body other than an SIP message Session Description, a session state, a message event other than an SIP initial request message, time, user presence information, a user state, a service invocation message, related information for another criterion, a virtual application server address, filter criterion validity, processing of service invocation result, a service identification, and a ban criterion for service control point invocation.

An embodiment of the present invention provides a service triggering method, comprising:

determining, by a service trigger point, whether a communication currently being processed should be triggered to a service control point or processed locally according to service filter criteria,

wherein the service filter criteria include at least one of the following:

a message body other than an SIP message Session Description, a session state, a message event other than an SIP initial request message, time, user presence information, a user state, a service invocation message, related information for another service filter criterion, a virtual application server address, filter criterion validity, processing of service invocation result, a service identification, and a ban criterion for service control point invocation.

In the packet network and its service triggering method, the service trigger point may modify the session signaling path and may support service triggering using SIP messages including SIP request messages and SIP response messages as well as service triggering using session state. That is, the service point trigger may trigger services according to all the SIP messages.

### BRIEF DESCRIPTION OF THE DRAWINGS

The accompanying figures will facilitate the understanding of the invention and form a part of the invention so as to describe the invention, wherein:

Fig. 1 is the structure of User Profile in the user profile in the prior art;

Fig. 2 is the structure of Service Profile in the user profile in the prior art;

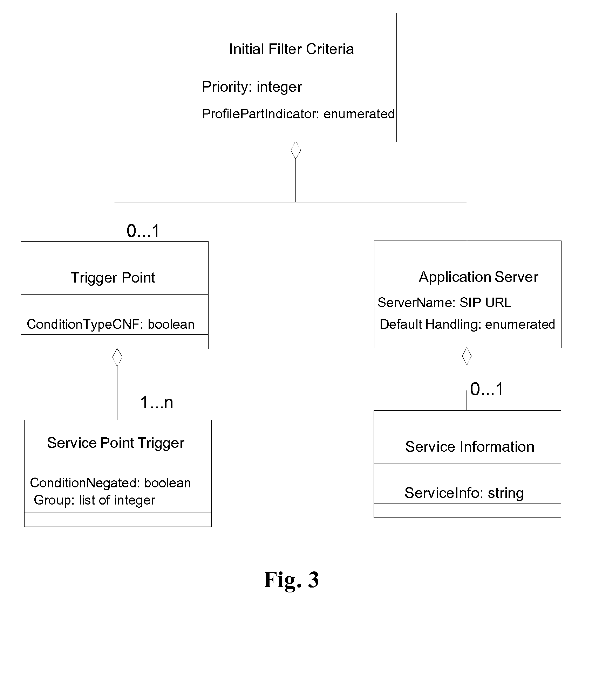

Fig. 3 is the structure of Initial Filter Criteria in the user profile in the prior art;

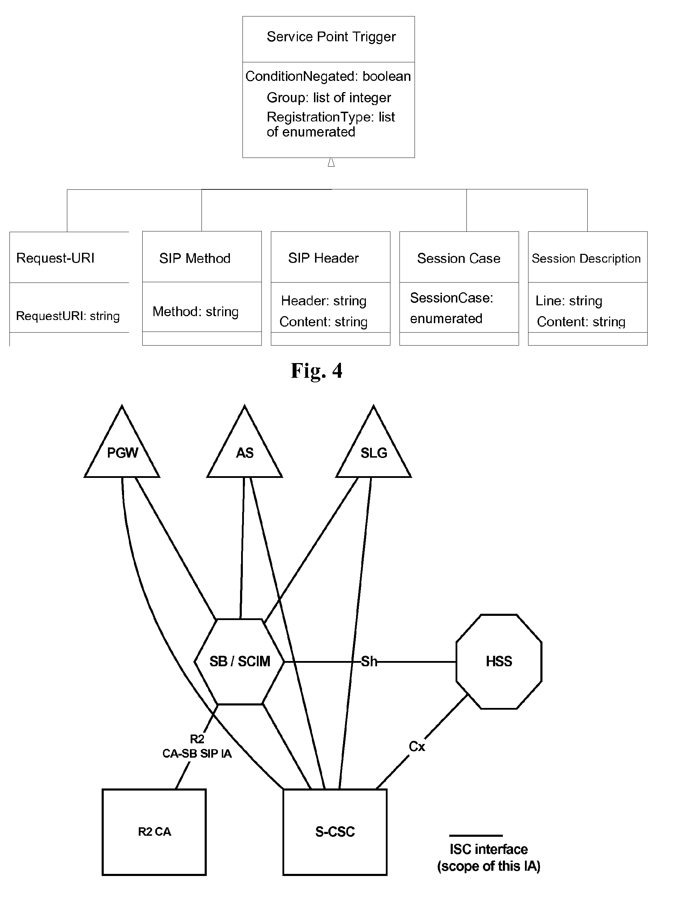

Fig. 4 is the structure of Service Point Trigger in the user profile in the prior art;

Fig. 5 is an R3-architecture ISC interface proposed by the MSF in the prior art;

Fig. 6 is the structure of SCIM Service Profile in the prior art;

Fig. 7 is the structure of SCIM Filter Criteria in the prior art;

Fig. 8 is the structure of SCIM Service Point Trigger in the prior art;

Fig. 9 is a network logic structure diagram of a packet network according to an embodiment of the present invention;

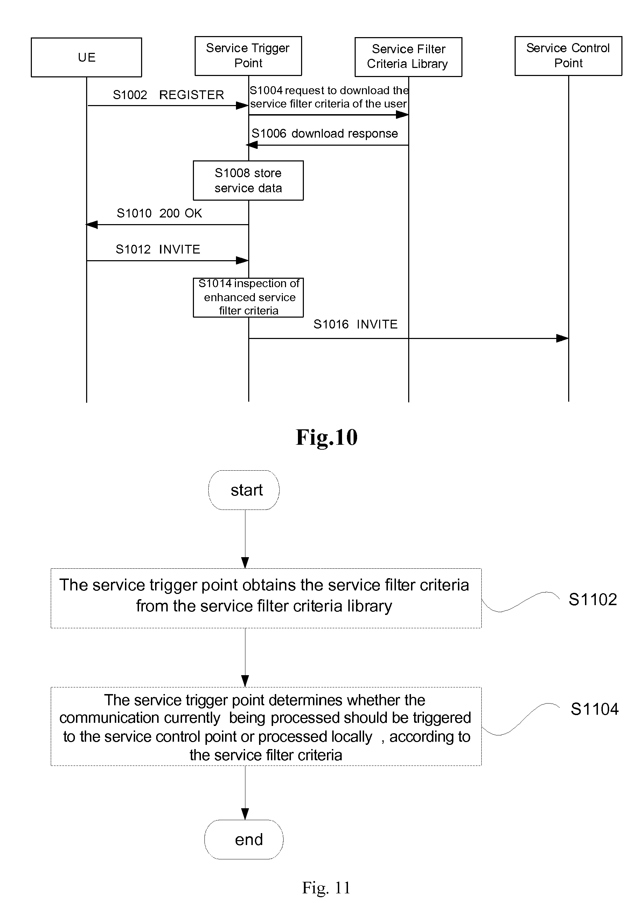

Fig. 10 is a flow chart of a service triggering process according to an embodiment of the present invention; and

Fig. 11 is a flow chart of a service triggering process according to an embodiment of the present invention.

### DETAILED DESCRIPTION

In the following, the present invention will be described with reference to the figures and embodiments.

Fig. 9 illustrates a network logic structure diagram of a packet network.

As shown in Fig. 9, the packet network 900 comprises a service filter criteria library 902, a service control point 904, and a service trigger point 906.

The service filter criteria library 902 stores or generates a service filter criterion for a user. There may be one or more service filter criteria libraries. In this embodiment, the service filter criteria library 902 may be an independent user subscription database, such as an HSS. The service filter criteria are stored therein as user subscription data. The service filter criteria library 902 may also be located in the service control point 904, wherein, for example, the service control point 904 generates the service filter criterion during the processing of the service. The service filter criteria library 902 may also be located in the service trigger point 906, wherein, for example, the service filter criteria are saved in the service trigger point 906 as a piece of program or configuration data.

The service trigger point 906 provides the capability for interacting with the service control point 904. In this embodiment, according to the service filter criterion, the service trigger point 906 determines whether the communication currently being processed should be triggered to the service control point 904 or be processed locally.

There is an E3 interface between the service trigger point 906 and the service control point 904. The interface protocol may be but is not limited to SIP, Intelligent Network Application Protocol (INAP), CAMEL Application Part protocol, Mobile Application Part (MAP) protocol, Open Service Access Application Program Interface (OSA API) protocol, internal interface protocol, etc.

Between the service trigger point 906 and the service filter criteria library 902 there is an E2 interface, which may use Diameter Protocol (e.g., when the service filter criteria library 902 locates at the HSS), SIP (e.g., when the service filter criteria library 902 locates at the service control point 904), Generic User Profile (GUP) protocol, MAP protocol, internal interface protocol, etc. The service trigger point 906 may obtain the service filter criterion for a user from the service filter criteria library 902 through the E2 interface. The service trigger point 906 may be an S-CSCF, or an Service Broker, or an SCIM AS, or a soft switch, etc.

The service control point 904 is the functional entity providing the service. A service control point may provide one or more services. Between the service control point 904 and the service filter criteria library 902 there is an E1 interface, which may use Diameter Protocol (e.g., when the service filter criteria library 902 is located at the HSS), etc. The service control point 904 may update the service filter criteria in the service filter criteria library 902 through the interface E1. The service control point 904 may be an SIP AS of IMS, an Open Service Access-Service Capability Server (OSA SCS), an IP Multimedia Service Switching Function (IM-SSF), an intelligent network Service Control Function (SCF), etc.

In short, the packet network 900 comprises:

a service filter criteria library 902, configured to store and generate a service filter criterion for a user;

a service control point 904, configured to provide a service to the user; and

a service trigger point 906, configured to obtain a service filter criterion from the service filter criteria library 902 and determine, according to the service filter criterion, whether the communication currently being processed should be triggered to the service control point 904 or be processed locally, wherein the service filter criterion includes at least one of the following: a message body other than an SIP message Session Description, a session state, an SIP message event other than an SIP initial request message, time, user presence information, a user state, a service invocation message, related information for another criterion, a virtual application server address, service filter criterion validity, processing of service invocation result, a service identification, a ban criterion for service control point 904 invocation.

According to the typical logic structure of a packet network according to the present invention as shown in Fig. 9, an embodiment of the invention proposes a typical service triggering flow.

Fig. 10 illustrates a flow chart of a typical service triggering flow according to the invention, which comprises the followings.

In step S1002, the service trigger point 906 receives a registration request from a terminal.

In step S1004, the service trigger point 906 requests to download a service filter criterion for a user from the service filter criteria library 902 where the user sending the registration message is located, and the service filter criteria library 902 responds and sends the service filter criterion for the user, which is the enhanced service filter criterion of the invention.

In step S1006, the service filter criteria library 902 responds to the request of downloading the service filter criterion for the user from the service trigger point 906.

As an example of the flow, consider that the service trigger point 906 is a Service Broker, the service filter criteria library 902 is an HSS, and the communication interface between the above two parties is a 3GPP Sh interface. The download request is a User-Data-Request message of the Diameter protocol, which carries a User-Identity AVP and a Data-Reference AVP as well as a Service-Indication AVP, wherein the User-Identity AVP is used to locate data of a user, Data-Reference AVP has the value of Repository Data indicating that the requested data is located at the user repository data area of the HSS, and the Service-Indication AVP has a value of a specific repository data identification corresponding to the service filter criterion. The download response is a User-Data-Answer message of the Diameter Protocol, which carries a User-Data AVP, and the data therein is the enhanced service filter criterion for the user which is requested by the service trigger points 906.

Specifically, the enhanced service filter criterion includes triggering according to a message body other than an SIP message Session Description, an SIP message event other than an SIP initial request message, a session state, time, user presence information, a user state, a service invocation message, related information for another criterion, a virtual AS address, service filter criterion validity, processing of service invocation result, service identification, a ban criterion for the service control point 904 invocation, etc, all of which will be described in detail with respect to the enhanced service filter criterion hereafter.

In step S1008, the service trigger point 906 saves the received service filter criterion of the user.

In step S1010, the service trigger point 906 sends a response message 200 OK to the terminal.

In step S 1012, the terminal sends an SIP INVITE message.

In step S1014, the service trigger point 906 performs determination of triggering according to the enhanced service filter criterion for the user, including triggering according to a message body other than an SIP message Session Description, an SIP message event other than an SIP initial request message, a session state, time, user presence information, a user state, a service invocation message, related information for another criterion, a virtual AS address, service filter criterion validity, processing of service invocation result, a service identification, and a ban criterion for the service control point 904 invocation. If the triggering condition is met and the server address described by the service filter criterion is the address of the service control point 904.

In step S1016, the service trigger point 906 sends an INVITE message to the service control point 904 specified by the service filter criterion to request to invoke the service.

If the server address described by the service filter criterion is the address of the virtual server, the service trigger point 906 invokes the local processing corresponding to the virtual server.

As shown in Fig. 11, the above service triggering procedure includes the following steps:

In step S 1102, the service trigger point 906 obtains the service filter criterion from the service filter criteria library 902.

In step S1104, the service trigger point 906 determines, according to the service filter criterion, whether the communication currently being processed should be triggered to the service control point 904 or be processed locally, wherein the service filter criterion includes at least one of the following: a message body other than an SIP message Session Description, a session state, an SIP message event other than an SIP initial request message, time, user presence information, a user state, a service invocation message, a related indication for another criterion, a virtual AS address, service filter criterion validity, processing of service invocation result, a service identification, and a ban criterion for the service control point 904 invocation.

Furthermore, during the service processing, the service control point 904 may directly send the service filter criterion to the service trigger point 906, or indirectly through the user subscription database thereto. The service trigger point 906 may perform subsequent processing accordingly. The service trigger point 906 may start matching processing upon receiving the service filter criterion, or it may first save the service filter criterion and then perform the matching processing after receiving the subsequent SIP message.

Generally, unlike the service filter criterion obtained from the user subscription database, the service filter criterion from the service control point 904 is only valid in the current communication. When the current communication is completed, the service trigger point 906 may delete the previously recorded service filter criterion from the service control point 904. That is to say, they are temporary service filter criterion. Obviously, during a communication processing, the service trigger point 906 may obtain the service filter criterion from different places, such as from the HSS or the service control point 904.

As described above, the present invention provides an implementing method for enhanced service triggering, which solves the related issues in the prior art using enhanced service filter criteria.

1. Service triggering according to a message body other than an SIP message Session Description

As states above, service triggering according to any part other than an SDP information in the SIP message body is not supported by the prior art. That is to say, service triggering according to the message body other than an SIP message Session Description is not supported by the current standard of 3GPP and MSF. To solve the problem, the invention introduces a message body element other than an SIP message Session Description into the service filter criterion. The value of the message body element includes Message Body Type and/or Message Body Content, wherein the Message Body Content may be in text code format or binary code format. Specifically, the invention defines a new SIP body service point trigger (SIP body SPT) type.

The SPT is defined to include the elements of Message Body Type and Message Body Content, wherein the Message Body Type corresponds to the value of Content-Type in the SIP message, indicating the media type of the message body according to the definitions in RFC 3261, and the Message Body Content represents the content of the message body indicated by Content-Type. Generally, Message Body Type uses Multipurpose Internet Mail Extensions media type, and accordingly, Message Body Content is MIME body.

Message Body Content further comprises two types of elements, Body Tag and Body Content, where Body Tag represents the tag name or tag value of the unit data included in the above message body content. If Message Body Content is encoded in text format, Body Tag may correspond to a tag name of an element. For example, if Message Body Content uses XML-encoding, Body Tag corresponds to a tag name of an XML element. If Message Body Content is encoded in a binary code, Body Tag may correspond to a tag value of a data unit included in Message Body Content, such as Message Type Code value or Parameter Name Code value in an SIP (SIP-I) message encapsulating Integrated Services Digital Network User Part (ISUP). Body Content corresponds to the content of the data unit corresponding to the Body Tag. For example, with SIP-I, Body Content may correspond to Parameter Content corresponding to Parameter Name Code indicated by the Body Tag. Message Body Type in SIP Body SPT is required to identify different content types. SIP Body SPT may have 0 to several Message Body Contents. The above elements may use regular expressions to indicate partial match or exact match.

The definition of the above SIP Body SPT is expressed in a table as follows:

**Table 1**

| **Data type** | **Tag** | **Compound of** | | |
|---|---|---|---|---|
| | | **Tag** | **Type** | **Cardinality** |
| tSIP Body | SIP Body | MessageBody Type | tString | 1 |
| | | Message Body Content | tMessage Body Content | (0 to n) |
| tMessage Body Content | Message Body Content | BodyTag | tString | 1 |
| | | BodyContent | tString | 1 |

The above is only for explaining that the service trigger point 906 may perform triggering according to the content of SIP message body, and the actual SPT definition is not limited to the above scheme. The situations for other SPTs of the invention are similar, which will not be stated thereafter.

In the following, the SPT description that performs triggering according to the message body other than an SIP message Session Description will be described with reference to two cases of the message-body encoded using text code and binary code, respectively.

Embodiment 1

The calling user is an IMS prepaid user. The short message sent by the user is encapsulated into the message body of SIP MESSAGE with XML. When the service trigger point 906 receives the SIP MESSAGE from that user and finds that the short message type indicator carried in the message body is 'message submit request', it triggers the current session to the service trigger point 904.

The way of encapsulating the short message in the message body of SIP MESSAGE using XML is as follows:

```
     MESSAGE sip: receiver@example.com, SIP/2.0
      Content-Type: multipart/related; type="application/message+xml";
       start="<nXYxAE@pres.vancouver.example.com>";
       boundary="=_005A0428C1257165_="
     --=_005A0428C1257165_=
       Content-Type: application/message+xml
       Content-ID: <nXYxAE@pres.vancouver.example.com>
     <?xml version="1.0" encoding="UTF-8"?>
       <message xmlns="urn:ietf:params:xml:ns:message">
        <message-type-indicator> message submit request
     </message-type-indicator>
        <message-class> personal </message-class>
        <delivery-report>Yes</delivery-report>
        <read-reply>Yes</read-reply>
        <content> This is a test message!</content>
       </message>
```

In this case, the corresponding SPT description according to the message body other than an SIP message Session Description is:

```
     <SPT>
     <ConditionNegated>0</ConditionNegated>
     <Group>0</Group>
     <SIPBody>
       <MessageBodyType>application/message+xml</MessageBodyType>
              <MessageBodyContent>
                     <BodyTag>message-type-indicator</BodyTag>
                     <BodyContent>message submit request</BodyContent>
              </MessageBodyContent>
     </SIPBody>
     </SPT>
```

wherein the value 'application/message+xml' of MessageBodyType indicates that the user's short message is encapsulated with XML. The field matched by the service trigger point 906 is that Content-Type in the SIP message comprises 'application/message+xml'. The value of 'message-type-indicator' for BodyTag and the value of 'message submit request' for BodyContent indicates that the service trigger point 906 needs to match content in the SIP message body encapsulated with 'application/message+xml' that has an XML tag of 'message-type-indicator' and a value of 'message submit request'.

Embodiment 2

When an IMS VPN user sends a short message which is placed in the message-body of the SIP message encapsulated with Short Message Service Transfer Layer (SMS TL), the service trigger point 906 triggers the SIP communication to the service control point 904. The service control point 904 further processes the short message. For example, it translates a VPN short number when a called number in the short message is the VPN short number.

Reference can be made to the standard document DES/AT-030036 released by European Telecommunications Standards Institute (ETSI) for the SMS TL encapsulation, which may be, for example: MESSAGE sip:1234567890@domain SIP/2.0 From: <sip:0987654321@domain>;tag=c0a80103-13c4-7e84-1ee41f1-2239 To: <sip:1234567890@domain> Call-ID: 247fc650-c0a80103-13c4-7e84-1ee41fl-4883@192.168.1.3 CSeq: 1 MESSAGE Via: SIP/2.0/UDP 192.168.1.3:5060;branch=z9hG4bK-7e84-1ee41f1-207e Content-Encoding: base64 Max-Forwards: 70 Content-Type: application/vnd.3gpp.sms-tl Content-Length: 32 EQMKgWBmhABAAACnDNTynA5ql+fz8LkM

In the above example, a TL SMS-SUBMIT message is encapsulated, which carries a text 'Test message'.

In this case, the corresponding SPT description according to the message body other than an SIP message Session Description is:

```
     <SPT>
       <ConditionNegated>0</ConditionNegated>
       <Group>0</Group>
       <SIPBody>
       <MessageBodyType>application/vnd.3gpp.sms-tl</MessageBodyType>
              <MessageBodyContent>
                     <BodyTag>TL-SMS SUBMIT</BodyTag>
              </MessageBodyContent>
       </SIPBody>
     </SPT>
```

The above SPT represents that the matching condition of the service trigger point 906 is to use 'application/vnd.3gpp.sms-t' encapsulation of DES/AT030036 and the Protocol Data Unit (PDU) type of the Short Message Transfer Layer (SM-TL) in the content part of the SIP message is 'SMS-SUBMIT'.

Such SPT description with binary encapsulation imposes a requirement for the service trigger point 906 that it need understand the meaning of the Body Tag and look up the corresponding data unit in the parsed binary content accordingly.

The SPT description here is only for showing that the service trigger point 906 may perform triggering with content of binary encapsulated SIP message body, and the actual SPT description method is not limited to the above SPT description.

2. Service triggering according to the session state of the service trigger point 906

As stated above, there exists the problem of limited Basic Call State in the prior art. That is to say, MSF currently supports four Basic Call States: Call Attempt, Busy, No Answer and Hang-up, which are not adequate for practical applications. Therefore the extension of the Basic Call State defined by MSF is considered. 3GPP TS23.278 defines a set of Detection Point (DP) state model used by IM-SSF. The invention proposes that the state model of the service trigger point 906 may refer to the definition of 3GPP TS23.278 to support more complete session state triggering capability.

To this end, Session State SPT is defined. The session states supported by Session State SPT of the service trigger point 906 include:

CollectedInfo, AnalysedInformation, RouteSelectFailure, O_Busy, O_No_Answer, O_Answer, O_Disconnect, O_Abandon, Terminating_Attempt_Authorised, T_Busy, T_No_Answer, T_Answer, T_Disconnect, T_Abandon.

Naturally, some session states may be defined in combination as necessary and new session state definition may be extended as necessary.

The above 'T_Busy' state therein may be situations, where the session reaches the user terminal and the user terminal returns a 'Busy' state, or where the network determines the 'busy' state before the session arrives at the user terminal, i.e., Network Determined User Busy (NDUB). NDUB may further comprise Approaching Network Determined User Busy. Therefore, one 'T_Busy' may be defined to represent the above cases of the user terminal returning busy and NDUB, or, two session states 'T_Busy_User_Terminal_Returned' and 'T_Busy_Network_Determined' may be defined to represent the above two cases, respectively. 'T_busy_Network_Determined' may be further divided to define a session state of 'Approaching_T_Busy_Network_Determined'. Similarly, 'O_Busy' may also be further divided, such as 'Approaching_O_ Busy'.

The above DP is completely copied from 3GPP TS 23.278. For the detailed definition of each DP, reference can be made to 3GPP TS 23.278.

The above Session State SPT definition is expressed in a table as follows:

**Table 2**

| **Data type** | **Tag** | **Base type** | **Comments** |
|---|---|---|---|
| tSessionState | SessionState | enumerated | Possible values: |
| | | | 2 (collectedInfo) |
| | | | 3 (analyzedInformation) |
| | | | 4 (routeSelectFailure) |
| | | | 5 (oCalledPartyBusy) |
| | | | 6 (oNoAnswer) |
| | | | 7 (oAnswer) |
| | | | 9 (oDisconnect) |
| | | | 10 (oAbandon) |
| | | | 12(termAttemptAuthorized) |
| | | | 13 (tBusy) |
| | | | 14(tNoAnswer) |
| | | | 15(tAnswer) |
| | | | 17(tDisconnect) |
| | | | 18(tAbandon) |

Since triggering IM-SSF according to DP is already a standard, the validity of the above session states will not be exemplarily described next. An embodiment of service triggering according to the session state by the service trigger point 906 is as follows.

Embodiment 3

The calling user has an auto repeat calling attempt service. When the routing for the session with the called party fails, the service trigger point 906 triggers the session to the service control point 904.

The corresponding Session State SPT is:

```
     <SPT>
       <ConditionNegated>0</ConditionNegated>
       <Group>0</Group>
       <SessionState>4</SessionState>
     </SPT>
```

The above 'SessionState' tag indicates that the service trigger point 906 is required to match the session state. The value '4' following the 'SessionState' tag indicates that the matching condition is the session state of the service trigger point 906 being 'routeSelectFailure'.

3. Service triggering according to SIP message event other than the SIP initial request message

As stated above, service triggering according to SIP message event other than the SIP initial request message is not supported in the prior art, including being unable to perform triggering according to an SIP subsequent request message and according to an SIP response message.

In the prior art, it seems that the SIP Method SPT may trigger the service according to all the SIP Methods. However, after the S-CSCF establishes the session signaling path, the SIP route set is fixed. Thus, when a service needs to be triggered after the session signaling path is established (triggering according to messages, for example, BYE, ACK, CANCEL, PRACK, UPDATA, etc.), service triggering using an arbitrary SIP request message is not supported by the S-CSCF, because the AS cannot be added to the already established SIP route set. In fact, the S-CSCF can only support service triggering according to the SIP Methods which are used to request the establishment of session signaling path as session initiation request, such as INVITE, MESSAGE, SUBSCRIBE, etc.

In embodiments of the present invention, the capability of the service trigger point is extended to enable it to change the session signaling path. That is, the response message following the SIP initial request message and the signaling path of subsequent SIP request message may be different from the signaling path of the SIP initial request message. Therefore, service triggering using all the SIP message types, including SIP request message and SIP response message, and all the session state in the invention, is supported. That is, the SIP Method SPT of the invention may trigger the service according to all the SIP Methods.

As the SIP Method SPT is already employed in the prior art, in the following, service triggering according to SIP message type other than the SIP request message will be described by taking the SIP response message as an example.

The format of the SIP response message is:

```
     Response-message = Status-Line
                       *message-header
                       CRLF
                       [ message-body ]
     Status-Line = SIP-Version SP Status-Code SP Reason-Phrase CRLF
```

As service triggering according to message header and SDP is supported by current 3GPP iFC mechanism, service triggering according to SIP message content other than the SDP is supported by the above embodiments of the invention, and moreover, combination of several SPTs is supported by iFC description itself, in the following, only support of service triggering according to SIP message Status-Code is necessary to be considered. Reason-Phase is a simple text description of Status-Code. For specific implementations, the SIP body may fill Reason-Phase with text description other than those defined in RFC 3261. Optionally, Reason-Phase is supported.

An SIP response SPT may be defined for Status-Code, which includes only one element, SIPResponse. The SIPResponse is of string type and may take the value of any response code compliant with the SIP protocol. SIPResponse may support wildcard and/or multiple value description to meet the requirement of the service control point 904 for processing some kind of response codes under certain circumstances. The wildcard and multiple value description may use an regular expression, or, for the sake of simplification, the wildcard and multiple value description may also be expressed as 4XX or 5XX, where 4XX represents a wildcard and that an SIP response code of 4 series will be considered as SPT being matched. Moreover, connecting 4XX and 5XX with a comma indicates that it is a multiple value match, and the presence of any one of the multiple of values separated by the comma is considered as the SPT being matched. The above is only to show that SIP Response SPT may support wildcard and/or multiple value description, and the SPT description is not limited to the above format.

The above SIP response SPT definition is expressed in Table 3.

**Table 3**

| **Data type** | **Tag** | **Base type** | **Comments** |
|---|---|---|---|
| tSIPResponse | SIPResponse | tString | |

An example of the service trigger point 906 triggering the service according to Status-Code is as follows:

Embodiment 4

The calling user has subscribed to a service which will have a session to be triggered to the service control point 904 for further processing when session failures of all types are received. For example, different audio notifications are played back according to different response codes.

The corresponding SIP Response SPT is expressed as:

```
     <SPT>
     <ConditionNegated>0</ConditionNegated>
     <Group>0</Group>
     <SIPResponse>4XX, 5XX, 6XX</SIPResponse>
     </SPT>
```

In the above SPT, "4XX, 5XX, 6XX" represent that the SPT is matched when the SIP response received by the service trigger point 906 is one of the 4 series, the 5 series, and the 6 series.

According to the above method, it is also possible to perform matching triggering for any SIP message other than the SIP initial request message, which will not be elucidated here.

4. Service triggering according to the time

As stated above, service triggering according to the time is not supported in the prior art.

In a practical application scenario, the user might have a Do-not-Disturb service and does not wish to be disturbed during the rest time between 00:00 and 06:00. Any incoming call during this period will be directed to the voice mail.

In an embodiment of the invention, a Time SPT is defined in Table 4.

**Table 4**

| **Data type** | **Tag** | **Base type** | **Comments** |
|---|---|---|---|
| tTime | Time | tString | |

The tTime may be described using a string. For the method for describing time, reference can be made to the format in ISO 8601. Time information may include one or more of year, month, day, hour, minute, and second. Start and end time of a period may be separated with the character '/', for example, 20:00/24:00.

An example of the service trigger point 906 triggering the service according to Time is as follows.

Embodiment 5

The user has a Do-not-Disturb service according to the time, and does not wish to be disturbed during the rest time between 00:00 and 06:00. Any incoming call during this period will be directed to the voice mail.

The corresponding Period SPT is expressed as:

```
     <SPT>
     <ConditionNegated>0</ConditionNegated>
     <Group>0</Group>
     <Time>00:00/06:00</Time>
     </SPT>
```

The above SPT represents that Time SPT is matched as long as the current time of the service trigger point 906 falls into the range of from 00:00 to 06:00.

5. Service triggering according to User Presence Information

As stated above, in the prior art, Calendar triggering by MSF only provides limited triggering capability according to user information. In contrast, the current PRESENCE specification may provide more user-related information, such as the user's place and the user's current activity. In the technical solution provided by an embodiment of the present invention, service triggering according to the user's Presence information may provide more powerful and more personalized service triggering capability.

An application scenario of triggering according to User Presence Information might be that the user may wish any call to be allowed during the working hours and call screening service to be activated at home.

For User Presence Information and the related format, reference can be made to the definitions by Internet Engineering Task Force (IETF). User Presence Information may also include the user's location information. In the current standards, presence information described in XML is usually carried by the message body of the SIP message. To adjust to the flexibility and scalability of presence information data, Presence SPT of the service trigger point 906 uses the definition of SIP Body SPT for reference.

The above Presence SPT definition is expressed in Table 5.

**Table 5**

| **Data type** | **Tag** | **Compound of** | | |
|---|---|---|---|---|
| | | **Tag** | **Type** | **Cardinality** |
| tPresence | Presence | Presence Type | tString | 1 |
| | | Presence Content | tPresence Content | (1 to n) |
| tPresence ontent | Presence Content | ElementTag | tString | 1 |
| | | Element Content | tString | 1 |

The PresenceType corresponds to different possible SIP Content Types. The description of PresenceSPT may use the above method.

The user presence information is relatively rich. For example, RFC 3863 defines a device state (basic). Internet draft "RPID: Rich Presence Extensions to the Presence Information Data Format" defines relatively rich status presence information types, such as activities, mood, place-type, place-is, privacy, and sphere. Internet draft "Session Initiation Protocol (SIP) User Agent Capability Extension to Presence Information Data Format (PIDF)" defines the device's communication capability (preference setting).

In the following, an example of the present information carried in the RPID format and received by the service trigger point 906 is given below.

Embodiment 6

The user wishes the incoming call screening service to be activated only at home.

An example of the SIP message carrying the User Presence Information received by the service trigger point 906 is give below.

```
     NOTIFY sip:[5555::aaa:bbb:ccc:ddd]:1357;comp=sigcomp SIP/2.0
     Via: SIP/2.0/LTDP ps.home2.net;branch=z9hG4bK348923.1
......
     Event: presence
     Content-Type: application/pidf+xml
......
     <?xml version="1.0" encoding="UTF-8"?>
       <presence xmlns="urn:ietf:params:xml:ns:pidf"
       xmlns:xsi="http://www.w3.org/2001/XMLSchema-instance"
        xmlns:dm="urn:ietf:params:xml:ns:pidf:data-model"
        xmlns:rpid="urn:ietfparams:xml:ns:pidf:rpid"
         xsi:schemaLocation="urn:ietf:params:xml:ns:pidf pidf.xsd
        urn:ietf:params:xml:ns:pidf:data-model data-model.xsd
        urn:ietfparams:xml:ns:pidfrpid rpid.xsd"
        entity="pres:someone@example.com">
......
         <rpid:place-type>
           <rpid:residence/>
         </rpid:place-type>
......
       </presence>
```

In the above, <rpid:residence/> represents the residence of the user. The residence may be where the user resides or someone else's home.

The corresponding Presence SPT is expressed as:

```
     <SPT>
     <ConditionNegated>0</ConditionNegated>
     <Group>0</Group>
     <Presence>
       <PresenceType>application/pidf+xml</PresenceType>
       <PresenceContent>
              <ElementTag>rpid:residence/</ElementTag>
       </PresenceContent>
     </Presence>
     </SPT>
```

In the above Presence SPT, ElementTag being "rpid:residence/" indicates that the Presence SPT is matched when the presence information received by the service trigger points 906 includes an XML tag "rpid:residence/".

The above embodiment performs the triggering according to the current location of the user. Presence SPT may also perform the triggering according to the user's activities, mood, place attribute, privacy, sphere, device status, and device communication capability, which corresponding description is similar and will not be elaborated here.

Furthermore, in the above embodiment, the presence information is carried using IETF RPID format, while it is also possible to carry the presence information using non-RPID format. For example, it may be carried using another text format or a binary format. In this case, the presence type of the presence information may be distinguished by PresenceType, and different presence types in the presence information are distinguished by ElementTag. For example, the SIP message carrying the user presence information received by the service trigger point 906 is given below.

```
     NOTIFY sip:[5555::aaa:bbb:ccc:ddd]:1357;comp=sigcomp SIP/2.0
     Via: SIP/2.0/LTDP ps.home2.net;branch=z9hG4bK348923.1
......
     Event: presence
     Content-Type: application/presence+text
......
     place-type: residence
```

The corresponding Presence SPT is expressed as:

```
     <SPT>
     <ConditionNegated>0</ConditionNegated>
     <Group>0</Group>
     <Presence>
       <PresenceType>application/presence+text</PresenceType>
       <PresenceContent>
              <ElementTag>place-type</ElementTag>
              <ElementContent>residence</ElementContent>
       </PresenceContent>
     </Presence>
     </SPT>
```

The above example is only to show that the presence information may be described in a non-RPID format, and the actual description format is not limited to the above way.

The user's presence information may also include the user's location information. An example of triggering the service according to the user's location information by the service trigger point 906 is given below.

Embodiment 7

The user is a valued customer of a Broadway theater. When the user comes close to the theater he may enjoy a discounted calling rate, so that the user patronizes the theater more often.

An example of the SIP message carrying the user's location information received by the service trigger point 906 is given below.

```
     NOTIFY sip:[5555::aaa:bbb:ccc:ddd]:1357;comp=sigcomp SIP/2.0
     Via: SIP/2.0/UDP ps.home2.net;branch=z9hG4bK348923.1
......
     Content-Type: application/pidf+xml
......
     <?xml version="1.0" encoding="UTF-8"?>
     <presence xmlns="um:ietf:params:xml:ns:pidf"
       xmlns:gp="urn:ietf:params:xml:ns:pidf:geopriv10"
       xmlns:cl=" um:ietf:params:xml:ns:pidf:geopriv10:civicLoc"
       entity="pres: geotarget@example.com">
       <status>
       <gp:geopriv>
        <gp:location-info>
          <cl:civicAddress>
           <cl:country>US</cl:country>
           <cl:Al>New York</cl:A1>
           <cl:A3>New York</cl:A3>
           <cl:A6>Broadway</cl:A6>
           <cl:HNO>123</cl:HNO>
           <cl:LOC>Suite 75</cl:LOC>
           <cl:PC>10027-0401</cl:PC>
          </cl:civicAddress>
        </gp:location-info>
       </gp:geopriv>
       </status>
     </presence>
```

An example of the specific Presence SPT description is given below.

```
     <SPT>
     <ConditionNegated>0</ConditionNegated>
     <Group>0</Group>
     <Presence>
       <PresenceType>application/pidf+xml</PresenceType>
       <PresenceContent>
       <ElementTag>cl:A3</ElementTag>
       <ElementContent>New York</ElementContent>
       <ElementTag>cl:A6</ElementTag>
       <ElementContent>Broadway</ElementContent>
       <ElementTag>cl:HNO</ElementTag>
       <ElementContent>123</ElementContent>
       </PresenceContent>
     </Presence>
     </SPT>
```

In the above Presence SPT, the user's location information is described using the city address of the location, where cl:A3 represents the city of the location, cl:A6 represents the block of the location, and cl:HNO represents the house number of the location.

In the above embodiment, administrative geography location information described with the city address is used. Presence SPT may also perform the triggering using physical geography location information described with longitude and latitude. It may also perform the triggering using the geography location where the terminal accesses the network, such as the access device number, the access network number, etc., which will not be described exemplarily here.

Similar to Embodiment 6, the description method of the user location information is not limited to the method defined in RFC 4119, which will not be described exemplarily here.

It should be noted that the geography location information is relatively special and important information of the user presence information. Therefore, the geography location information may also be described using a separate Location SPT.

6. Service triggering according to the user state

As stated above, service triggering according to the user roaming state and initial unregistered state is not supported in the prior art. An example of service triggering according to the user's roaming state is that the user restricts incoming calls from other users but does not restrict outgoing calls from the user while roaming. The obtaining of the user's roaming state depends on the specific implementation of the service trigger point 906, which may be but is not limited to, for example, that the service trigger point 906 determines whether the user is in roaming according to Visited Network ID in the P-Visited-Network-ID header of the SIP message.

For this purpose, a Roaming State SPT is defined below.

**Table 6**

| **Data type** | **Tag** | **Base type** | **Comments** |
|---|---|---|---|
| tRoamingState | RoamingState | enumurated | 0 (roamingState) |
| | | | 1 (non-roamingState) |

Embodiment 8: the user restricts incoming calls from the other users while roaming

The corresponding Roaming State SPT is expressed as:

```
       <SPT>
       <ConditionNegated>0</ConditionNegated>
       <Group>0</Group>
       <RoamingState>0</RoamingState>
       </SPT>
```

The above SPT represents that Roaming State SPT is matched if the service trigger point 906 finds that the user is in roaming state. The SPT together with Session Case SPT (e.g., with a value of INVITE) and SIP Method SPT (e.g., with a value of TERMINATING_REGISTERED) may be used to implement the function of triggering the incoming calls to the service control point 904 when the called user is roaming.

TERMINATING_UNREGISTERED is supported by iFC using SessionCase which has a value of '2'. Providing the calling user with service triggering at Unregistered state is supported by the invention. For example, the SessionCase element is still used in the service filter criterion and a SessionCase with a value of '3' is extended to represent Origingating_Unregistered. Thus providing the calling user with a filter criterion based on the user's registration state is supported. If the user is not registered in IMS but in the circuit domain, when the user initiates a call which enters IMS from the circuit domain, the service trigger points 906 of the calling user invokes the corresponding service control point 904 at Unregistered state.

7. Service invocation messages may be specified in the service filter criterion

As stated above, the prior art can only treat the triggering message of a service filter criterion as the invocation message for a specific service control point 904 when the criterion is matched. To solve the problem, the invocation message for the service control point 904 may be specified in the service filter criterion.

Embodiment 9

The service trigger point 906 receives an SIP response message, such as a 200 response code, the SIP response message matches a service filter criterion, and a specific service control point 904 needs to be invoked. The service control point 904 has a name of "sip:as@ims.example.com", and the invocation message sent from the service trigger point 906 to the service control point 904 is an SIP BYE message, which is as follows:

```
     <SPT>
       <SIPResponse>200</SIPResponse>
     </SPT>
     .........................
     <ApplicationServer>
       <ServerName>sip:as@ims.example.com</ServerName>
       <InvokingMessage>BYE</InvokingMessage>
     </ApplicationServer>
```

A setting of InvokingMessage tag is added to the description of ApplicationServer, which may take a value of any SIP message.

Embodiment 10

Specifying the invocation message for the service control point 904 in the service filter criterion has another important application. It might be impossible to describe the triggering message in the SPT, for example using the above SessionState SPT. It can be seen that some session states are not caused by the service trigger point 906 receiving an SIP message, such as the session state of "tNoResponse". Obviously, the invocation message sent from the service trigger point 906 to the service control point 904 must be specified in the service filter criterion then, an example of which is as follows:

```
     <SPT>
       <SessionState>14</SessionState>
     </SPT>
     .........................
     <ApplicationServer>
       <ServerName>sip:as@ims.example.com</ServerName>
       <InvokingMessage>INVITE</InvokingMessage>
     </ApplicationServer>
```

The message name is described in the above service invocation message element and may be any SIP message. When the service control point 904 is not of the same type, e.g., it may be an IMS AS or an Intelligent Network SCP, the service invocation message element may also specify the protocol type of the message, i.e., E3 interface, where, for example, the value "IN" represents that the invocation message is of Intelligent Service Protocol. It may further specify the type of the Intelligent Service Protocol, e.g., with a value "INAP". Furthermore, if the message protocol type is not specified, the default value may be "SIP". The service invocation message element may also specify key parameters in the message, such as service key parameter of intelligent service, signaling address of SCP, protocol version, etc.

8. Related information for another criterion may be described in the service filter criterion

As state above, in the prior art, no more than one filter criterion can be related with each other. To relate more than one filter criterion, first, one service filter criterion needs to be identified, that is, to name and number the service filter criterion. Secondly, the service execution result of the service control point 904 with a matched service filter criterion needs to be defined, e.g., "1" indicates "success", "0" indicates "failure", etc.

Embodiment 11

Description of the relating indication with another service filter criterion may be present in one service filter criterion, an example of which is as follows:

```
     <ApplicationServer>
       <ServerName>sip:as@ims.example.com</ServerName>
       <Relation>
              <Result>0</Result>
              <RelatingFilterCriteria>FC00abc</RelatingFilterCriteria>
       </Relation>
     </ApplicationServer>
```

Description of the relation indication with another service filter criterion may be present in the settings of the service control point 904. For example, the relation of the execution result of the service control point 904 with another service filter criterion (with a tag of Relation) is given after the name of the specific service control point. When the execution Result is 0 (failure), the related service filter criterion is invoked. The tag RelatingFilterCriteria gives the name 'FC00abc' of the relating criterion. That is, another related criterion corresponding to a specific service control point 904 is given in the present service filter criterion, and other relation criteria are referenced according to the execution result of the service control point 904.

Of course, description of the relating indication with other service filter criteria may also be present in the next service filter criterion. That is, the execution result of the other related criterion is referenced in the SPT of the present service filter criterion as a matching condition. An example is as follows.

```
     <SPT>
       <Relation>
            <RelatingFilterCriteria>FC 11 xyz</RelatingFilterCriteria>
            <Result>1</Result>
       </Relation>
     </SPT>
```

At the SPT, it is required to check the execution result of the service filter criterion named FC11xyz. Furthermore, as stated above, the service control point 904 may return the service filter criterion to the service trigger point 906, and the service trigger point 906 may immediately perform matching processing on the service filter criterion. At this point, the name RelatingFilterCriteria may not appear in the service filter criterion, and the value of Result is considered as the execution result from the service control point 904. That is, RelatingFilterCriteria may take an explicit value or a default value.

Other than referencing another related criterion according to the execution result of the current criterion or taking the execution result of the other related criterion as the matching condition of the current criterion, it is also possible to preset other filter criteria in one service filter criterion. The preset criterion may or may not be executed, depending on whether the service trigger point 906 may obtain the corresponding triggering condition subsequently.

It can be seen that the related information for another criterion described in the service filter criterion includes at least the service execution result or the other filter criterion.

9. Virtual AS addresses may be described in the service filter criterion

As stated above, in the prior art, specific processing cannot be specified after the triggering condition is matched. To solve the problem, a virtual AS address is introduced into the service filter criterion.

The virtual AS address corresponds to a piece of program or script at the service trigger point 906. The virtual AS address is not expressed using SIP Uniform Resource Locator (URL) but may be expressed in a similar way. For example, the field description part of the virtual AS address corresponds to the host address of the service trigger point 906, and the user part corresponds to a piece of program or script at the service trigger point 906. The virtual AS address may have a parameter as the input of the corresponding program or script. And the carried parameter may be a parameter not in the SIP.

The description of the virtual AS address may be located at the description of service control point 904 in the service filter criterion. For example, it is located at the server address description part in the filter criterion data.

Embodiment 12

The address of the service trigger point 906 is triggerPoint1.home.net, which has a script localScript3 thereon for sending messages to a presence server. The script localScript3 has an input parameter of the presence server indicating to which presence server the parameter should be sent. A server address description in the filter criterion data obtained is:
<ServerName>localScript3@triggerPoint1.home.net; presenceServer= presenceServer10.home.net</ServerName>

In the above example, localScript3@triggerPointl.home.net represents that the corresponding script or program at triggerPoint1.home.net is localScript3. The "presenceServer=presenceServer10.home.net" thereafter is the input of the script localScript3, indicating that the script may request the user's presence data from the address presenceServer10.home.net. That is, when the triggering condition of the filter criterion is met, the triggerPoint1.home.net of service trigger point 906 calls the script localScript3 thereon, and the called script requests the user's presence data from presenceServer10.home.net according to the parameter 'presenceServer' in the virtual AS address.

10. The validity of the filter criterion may be described in the service filter criterion

As stated above, in the prior art, the service trigger point 906 always executes the service filter criterion after obtaining it. However, in fact, the filter criterion may be "valid temporarily" only. As stated above, during the current communication processing procedure, the service filter criterion from the service control point 904 may only be valid in the current communication processing.

An embodiment of the invention provides two ways for describing the validity of the service filter criterion, one of which is to add a validity element in the service filter criterion. The validity element takes at least one of the following values: invalid, valid, valid for the current communication, and valid for once. The "invalid" therein indicates that the service filter criterion is invalid and the service trigger point 906 does not have to execute them. The "valid" indicates that the service filter criterion is always valid (until it is specified as being invalid or the service filter criterion is deleted) and the service trigger point 906 needs to execute the service filter criterion. The "valid for the current communication" indicates that the service filter criterion is only valid during the current communication processing. When the communication is released, the service trigger point 906 may delete the service filter criterion or change the value of the validity element to "invalid". The "valid for once" indicates that the service filter criterion becomes invalid after being executed for once, and the service trigger point 906 may delete the service filter criterion or change the value of the validity element to "invalid".

The above method is an explicit validity indication method. Another method is an implicit validity indication method. That is, it does not extend a validity element. On the contrary, the service trigger point 906 determines the validity of the service filter criterion on its own according to the current communication processing condition. For example, the service trigger point 906 by default considers that the service filter criterion from the service control point 904 is 'valid for once' during the current communication processing, while the service filter criterion from the user's subscription database is 'valid'.

11. The processing of service invocation result may be described in the service filter criterion

The first case of the service invocation result is as follows. The service trigger point 906 fails to send the invocation message to the service control point 904, and no message is returned from the service control point 904 within the specified time, i.e., timeout and no response. For example, a network failure leads to the failure of the transmission of the invocation message or failure of returning the message.

At this point, a processing of service invocation result element is added to the service filter criterion. The processing of service invocation result element is at least one of the following: reinvocating the service control point 904, invocating homogeneous service control point, executing the next service filter criterion, stopping the execution of the service filter criterion, and communication release. The "reinvocating the service control point" therein means to reinvocate the service control point which fails in the current invocation.

"Invocating homogeneous service control" point means to invocate the service control point that may provide the same service as the service control point which fails in the current invocation (i.e., homogeneous service control point). For example, if AS1's invocation fails, and AS2 may provide the same service as AS1, the service trigger point 906 invokes AS2. The address of AS2 may be configured in the service filter criterion together with that of AS1.

"Executing the next service filter criterion" means that the current invocation failure is ignored and the next service filter criterion, if any, is executed. "Stopping the execution of the service filter criterion" means that the current invocation failure is ignored and executing all the subsequent service filter criteria, if any, is stopped. "Communication release" means to release the current communication.

The second case of the service invocation result is as follows. After the service control point 904 receives an invocation message, for some reason, such as system failure, the service logic is not invoked that should have otherwise. The service control point 904 indicates service logic invocation failure (It should be noted that it is not the failure of current communication after the executing of service logic invocation, such as call restriction) in the returned response. The service trigger point 906 performs the corresponding processing on the service invocation result accordingly, as discussed above.

There is a special third case of the service invocation result as follows. The service control point 904 performs the corresponding processing after receiving an invocation message and returns a message different with the invocation message. For example, the service control point 904 receives an SIP INVITE message and returns an SIP response message to the service trigger point 906. In the prior art, the other subsequent service filter criteria would not be executed any more, while in an embodiment of the invention, execution of "the next service filter criterion" may be chosen by setting "processing of service invocation result". Of course "stopping the execution of the service filter criterion" may also be chosen.

In the third case, there is still another problem when the service trigger point 906 executes "the next service filter criterion", i.e., using the original triggering message received by the service trigger point 906 or the response message returned by the previous service control point 904 to match the next service filter criterion.

For example, the service trigger point 906 receives an INVITE message, executes a first service filter criterion, invokes a first service control point, and then receives a message with response code 415. At this point, the service trigger point 906 determines whether to use the INVITE message or the 415 message to execute the next service filter criterion.

To solve the problem, the invention extends a "matching condition" element for the "next service filter criterion". The "matching condition" might be the original triggering condition of the service trigger point 906, the invocation message of the previous service control point 904, the message returned by the previous service control point, or even other specified messages. The "original triggering condition of the service trigger point" therein may be an original triggering message received by the service trigger point 906 or an originally triggered session state.

Similar to the above filter criterion validity, the above method is an explicit representation method for processing of service invocation result. Another method is an implicit representation method for processing of service invocation result. That is, no element of processing of service invocation result is extended. Rather, the service trigger point 906 determines the method for the processing of service invocation result by itself according to the communication processing condition. For example, for the above first case, the service trigger point 906 assumes, by default, the processing of "invoking homogeneous service control point", etc.

Furthermore, "matching condition" may be located in the processing of service invocation result element, i.e., in the previous service filter criterion. It may also be separately located in the next service filter criterion as an indication condition for matching of the current service filter criterion.

Embodiment 13

The service trigger point 906 receives an INVITE message and invokes a calling name collecting AS. The AS is adapted to playback the calling user's name to the called user when the called user answers. The call is directed to the called terminal, which rings but does not answer. The service trigger point 906 invokes a voice mail AS according to the service filter criterion 1 of the session state being "t_No_Answer" and sends the specified invocation message INVITE to the voice mail AS. The voice mail responds and returns a message with response code 200. The service trigger point 906 executes the next service filter criterion 2 using the session state of "t_No_Answer", according to the "next service filter criterion" set in the first service filter criterion 1 and the corresponding "original triggering condition of the service trigger point 906". The execution result is to send the specified invocation message BYE to the calling name collecting AS to release the invocation of the calling name collecting AS, so as to avoid playing back the calling user's name to the voice mail AS.

12. The service identification may be described in the service filter criterion

As stated above, in the prior art, the service corresponding to the service filter criterion cannot be identified, nor can the service type serve as a criterion matching condition. To solve the problem, a service identification is introduced into the service filter criterion. A corresponding service identification for a service is unique within an operator's network.

The description of the service identification may appear in the setting for the service control point to indicate the service to be triggered by the service filter criterion. In this case, one service filter criterion corresponds to one service. Such as:

```
     <ApplicationServer>
       <ServerName>sip:as@ims.example.com</ServerName>
       <ServiceIndentifier>InComingCallScreening</ServiceIndentifier>
     </ApplicationServer>
```

In the above example, a ServiceIndentifier tag is added to the AS description in the service filter criterion to describe that the service to be triggered by the service filter criterion is an incoming call screening service, whose service identification is InComingCallScreening.

The service identification may also be located in the server name part, such as:

```
     <ApplicationServer>
       <ServerName>
              sip:InComingCallScreening@ims.example.com
       </ServerName>
     </ApplicationServer>
 or
     <ApplicationServer>
       <ServerName>
              sip :as@ims.example.com;service= InComingCallScreening </ServerName>
     </ApplicationServer>
```

Of course, the description of the service identification may also appear in the SPT description in the service filter criterion. That is, the already invoked service type is taken as a matching condition, which is given below.

```
     <SPT>
            ..........................
            <ServiceIndentifier>InComingCallScreening</ServiceIndentifier>
     </SPT>
```

In the above example, a ServiceIndentifier tag is added to the SPT part of the service filter criterion to show that one of matching conditions of the service filter criterion is that the incoming call screening service has already been triggered, and the service identification is InComingCallScreening.

13. The invocation ban criterion for the service control point 904 may describe in the service filter criterion

As stated above, a ban criterion for the service control point invocation is not supported in the prior art. When the service trigger point 906 receives a subsequent service triggering message after the service control point has been invoked, in some special cases, the service control point might not receive the triggering message. The requirement cannot be met by excluding the service control point from the service filter criterion corresponding to the triggering message. An embodiment of the invention provides a ban criterion of invocation in the service filter criterion that may describe the service control point, so as to meet the above requirement.

Embodiment 14

The service trigger point 906 receives an SIP invite message and invokes AS1, AS2, and AS3 in turn according to the service filter criterion. After that, the service trigger point 906 receives an answering response message 200 from the voice mail. However, AS2 does not wish to receive the response message 200 which may lead to service application error (AS2 only handles answer response messages 200 from the user terminal). At this point, it is difficult to meet the above requirement by excluding the invocation of AS2 from the service filter criterion of the response message 200 and only invoking AS1 and AS3. This is because it is difficult to predict which AS('s) is/are already invoked for those 200-like response messages. Generally, the service control point described in the service filter criterion of the response message is either newly-added (i.e., not invoked during the processing of the corresponding SIP initial request message), or needs special processing by the invoked service control point, such as specifying a new invocation message, describing whether the service control point may be invoked, etc., in the above. The related service filter criterion part for the latter processing is as follows.

```
     <SPT>
       <SIPResponse>200</SIPResponse>
     </SPT>
     .........................
     <ApplicationServer>
       <ServerName>sip:as2@ims.example.com</ServerName>
       <BAN>TRUE</BAN>
     </ApplicationServer>
```

A BAN tag setting is added in the description of ApplicationServer. A value 'TRUE' indicates that the answer response message 200 is banned from sending to AS2.

As has been shown from the above examples, the service trigger point 906 may use multiple service filter criteria from different places, such as an HSS, a service control point, or even the service trigger point 906 itself, during a communication processing. Obviously, the service filter criteria from different places may be in different forms of description, such as XML description similar to iFC, a piece of program, or a datasheet, that is, service filter criteria may exsit in different forms of description. Of course, the service filter criteria from different places may also be uniformed to be in the same form of description. Furthermore, the service filter criteria from different places may have different criterion elements. For example, the service filter criteria from the service trigger point 906 may only have criterion elements of, among others, processing of service invocation result and/or service filter criterion validity. Of course, the service filter criteria from different places may also have the same criterion elements uniformly. Furthermore, similar to iFC, the SPTs in the service filter criterion of the invention support logical operations, such as NOT, OR, AND, etc. That is, the SPT may exclude the triggering ban condition or combine the SPTs.

As has been shown from the above description, the technical solutions of the invention provide an enhanced service triggering mechanism. The service trigger point 906 may trigger the communication currently being processed to the service control point or have it processed locally according to a message body other than an SIP message Session Description, a message event other than an SIP initial request message, a session state, time, user presence information, a user state, a service invocation message, related information for another criterion, a virtual application server address, filter criterion validity, processing of service invocation result, a service identification, and a ban criterion for service control point invocation. With the technical solutions of the invention, service triggering according to a message body other than an SIP message Session Description, a message event other than an SIP initial request message, and time is supported. Calendar triggering by MSF only provides limited user information triggering capability. More triggering methods are provided, and it is possible to perform triggering according to the user state, to reference other filter criteria, to specify specific processing after the triggering condition is matched, to manage the validity of the service filter criterion, and to specify the service invocation message. Thus, more enriched processing on the service invocation result is provided. It is possible to identify the service corresponding to the service filter criterion and take the service type as the criterion matching condition, and to use a ban criterion for AS invocation. As a result, the effectiveness and flexibility of the service triggering are improved, service confliction avoided, and load of the service control point reduced.

Apparently, those skilled in the art should appreciate that each module or step in the above embodiments of the invention may be implemented with general computing apparatus; they may be integrated in a single computing apparatus or distributed over a network made up of a plurality of computing apparatuses. Optionally, they may be implemented using the program codes executable on the computing apparatus. Thus, they may be stored to the storage means and executed by the computing apparatuses, they may be made into individual IC modules, or several of the modules or steps may also be made into a signal IC module. Thus, the invention is not limited to the combination of any specific hardware and software. It should be appreciated that the variations of the embodiment are obvious to those skilled in the art and therefore do not depart from the spirit of the invention.

The above descriptions are only preferred embodiments of the invention, and are not intended to limit the scope of the invention. A wide variety of changes and variations thereon are possible for those skilled in the art. Any modification, equivalent substitution, and improvement within the spirit and scope of the invention are intended to be included in the scope of the invention.

## Claims

1. A packet network comprising:
a service filter criteria library, configured to provide a service filter criterion for a user;
a service control point, configured to provide a service to the user; and
a service trigger point, configured to obtain the service filter criterion from the service filter criteria library and determining, according to the service filter criterion, whether a communication currently being processed needs to be triggered to the service control point or processed locally, wherein the service filter criterion comprises at least one of the following:
a message body other than an SIP message Session Description, a session state, a message event other than an SIP initial request message, time, user presence information, a user state, a service invocation message, related information for another criterion, a virtual application server address, filter criterion validity, processing of service invocation result, a service identification, and a ban criterion for service control point invocation.

2. The packet network of claim 1, wherein the service filter criterion comprises a message body element other than an SIP message Session Description, and the message body element comprises a message body type and/or a message body content.

3. The packet network of claim 2, wherein
the message body type is a Multipurpose Internet Mail Extensions (MIME) media type; and
the message body content is an MIME body.

4. The packet network of claim 1, wherein the session state comprises at least one of the following:
CollectedInfo, AnalysedInformation, RouteSelectFailure, O_Busy, O_No_Answer, O_Answer, O_Disconnect, O_Abandon, TerminatingAttemptAuthorised, T_Busy, T_No_Answer, T_Answer, T_Disconnect, T_Abandon; or
the user state comprises at least one of the following states: Registered and Roaming.

5. The packet network of claim 1, wherein the message event other than an SIP initial request message comprises at least one of the following: an SIP response message and an SIP subsequent request message.

6. The packet network of claim 5, wherein the service filter criterion comprises an SIP response message element, and the SIP response message element supports wildcard and/or multiple value description.

7. The packet network of claim 1, wherein the user presence information comprises at least one of the following:
activities, mood, place-type, place-is, privacy, sphere, device state, device communication capability, and user location information.

8. The packet network of claim 7, wherein the user location information comprises at least one of physical geography location information, administrative geography location information, and network geography location information.

9. The packet network of claim 1, wherein the related information for another criterion comprises at least one of the following: a service execution result or another filter criterion.

10. The packet network of claim 9, wherein the related information for another criterion is located in a service point trigger description and/or a service control point description.

11. The packet network of claim 1, wherein the service invocation message is a specified message sent from the service trigger point to the service control point.

12. The packet network of claim 11, wherein the service filter criterion comprises a service invocation message element, and the value of the service invocation message element comprises at least one of the following information:
a message protocol type, a message name, and a key parameter in the message.

13. The packet network of claim 1, wherein
the virtual application server address corresponds to a piece of program or script at the service trigger point;
the filter criterion validity comprises at least one of the following: invalid, valid, valid for current communication, or valid for once;
the processing of service invocation result comprises at least one of the following:
reinvoking the service control point, invoking a homogeneous service control point, executing a next service filter criterion, stopping the execution of the service filter criterion, and releasing communication; or
the service identification is located at the service point trigger description and/or service control point description.

14. The packet network of claim 1, wherein the service filter criterion further comprises a matching condition, and the matching condition comprises at least one of the following:
an original triggering condition of the service trigger point, an invocation message of a previous service control point, and a message returned by a previous service control point.

15. A service triggering method comprising:
determining, by a service trigger point, whether a communication currently being processed should be triggered to a service control point or processed locally, according to a service filter criterion,
wherein the service filter criterion comprises at least one of the following:
a message body other than an SIP message Session Description, a session state, a message event other than an SIP initial request message, time, user presence information, a user state, a service invocation message, related information for another service filter criterion, a virtual application server address, filter criterion validity, processing of service invocation result, a service identification, and a ban criterion for service control point invocation.

16. The service triggering method of claim 15, wherein the service filter criterion comprises a message body element other than an SIP message Session Description, and the message body element comprises a message body type and/or a message body content.

17. The service triggering method of claim 16, wherein the message body type is a Multipurpose Internet Mail Extensions (MIME) media type, and the message body content is an MIME body.

18. The service triggering method of claim 17, wherein the session state comprises at least one of the following:
CollectedInfo, AnalysedInformation, RouteSelectFailure, O_Busy, O_No_Answer, O_Answer, O_Disconnect, O_Abandon, TerminatingAttemptAuthorised, T_Busy, T_NoAnswer, T_Answer, T_Disconnect, and T_Abandon.

19. The service triggering method of claim 18, wherein the O_Busy and/or the T_busy comprise at least one of the following:
User Terminal Returned Busy, Network Determined Busy, and Approaching Network Determined Busy.

20. The service triggering method of claim 15, wherein the message event other than an SIP initial request message comprises at least one of the following: an SIP response message and an SIP subsequent request message.

21. The service triggering method of claim 20, wherein the service filter criterion comprises an SIP response message element, and the SIP response message element supports wildcard and/or multiple value description.

22. The service triggering method of claim 15, wherein the related information for the other criterion comprises at least one of the following:
a service execution result and another filter criterion.

23. The service triggering method of claim 22, wherein the related information for the other filter criterion is located in a service point trigger description or a service control point description.

24. The service triggering method of claim 15, wherein
the service trigger point determines whether to execute the other service filter criterion according to the related information for the other service filter criterion; or
the service trigger point determines whether the communication currently being processed should be triggered to a service control pointed described in the service filter criterion, according to the related information for the other service filter criterion.

25. The service triggering method of claim 15, wherein the service invocation message specifies a message sent from the service trigger point to the service control point.

26. The service triggering method of claim 25, wherein the service filter criterion comprises a service invocation message element, which comprises at least one of the following information: a message protocol type, a message name, and a key parameter in the message.

27. The service triggering method of claim 15, wherein
the user presence information comprises at least one of the following: activities, mood, place-type, place-is, privacy, sphere, device state, device communication capability, and user location information;
the user state comprises at least one of the following state: Registered and Roaming;
the virtual application server address corresponds to a piece of program or script at the service trigger point;
the filter criterion validity comprises at least one of the following: invalid, valid, valid for current communication, or valid for once; or
the service identification is located in the service point trigger description and/or a service control point description.

28. The service triggering method of claim 15, wherein the processing of service invocation result comprises at least one of the following:
reinvoking a service control point;
invoking a homogeneous service control point;
executing a next service filter criterion;
stopping the execution of a service filter criterion; and
releasing communication.

29. The service triggering method of claim 15 or 28, wherein the service filter criterion further comprises a matching condition, and the matching condition comprises at least one of the following:
an original triggering condition of a service trigger point;
an invocation message of a previous service control point;
a message returned by a previous service control point;
another specified message.

30. The service triggering method of claim 28, wherein the processing of service invocation result occurs in a situation which is at least one of the following:
sending an invocation message from a service trigger point to a service control point fails;
invoking service logic by a service control point fails; and
a service control point returns a message different from the message invoking the service control point.

31. The service triggering method of any of claims 15, 22, and 25-28, wherein the service trigger point obtains a service filter criterion from a service filter criteria library, and the service filter criteria library is located at one of the following locations: a user subscription database, a service control point, and a service trigger point.

32. The service triggering method of claim 31, wherein the service trigger point may execute the service filter criterion immediately or after receiving a subsequent communication message, when the service filter criterion comes from the service control point directly or indirectly.
